# EUROPÄISCHE PATENTSCHRIFT

(11) **EP 1 269 822 B1**
(45) Veröffentlichungstag und Bekanntmachung des Hinweises auf die Patenterteilung: **04.10.2006**
(21) Anmeldenummer: 02013046.4
(22) Anmeldetag: 13.06.2002
(51) Int. Cl.: A01D 41/12

(54) **Mähdrescher mit Wurfgebläse**
Combine harvester with discharge blower
Moissonneuse-batteuse avec une soufflerie de décharge

(30) Priorität: 27.06.2001 DE 10130652
(43) Veröffentlichungstag der Anmeldung: 02.01.2003
(73) Patentinhaber: CLAAS Selbstfahrende Erntemaschinen GmbH, 33428 Harsewinkel (DE)
(72) Erfinder: Niermann, Martin, 33428 Harsenwinkel (DE); Strickmann, Dieter, 49176 Hilter (DE); Brinkmann, Jörn, 33428 Harsewinkel (DE); Amsbeck, Dieter, 33428 Harsewinkel (DE); Nollmann, Jürgen, 33775 Versmold (DE); Perdun, Martin, 33428 Harsewinkel (DE); Kucerin, Sergej, 32602 Vlotho (DE)

(56) Entgegenhaltungen:
- EP-A- 0 635 198
- WO-A-02/34029
- DE-C- 19 908 111
- US-A- 5 833 533
- US-B1- 6 238 286

## Beschreibung

Die Erfindung bezieht sich auf einen Mähdrescher nach dem Gattungsbegriff des Patentanspruchs 1. Der Wortlaut des Gattungsbegriffs ist weitgehend der Offenbarung der von der Anmelderin selbst ausgehenden DE-PS 19908111 entnommen.
Hierbei handelt es sich um Mähdrescher mit Horden-Strohschüttlern oder mit rotierenden Einrichtungen zur Strohtrennung, denen ein separater Strohhäcksler nachgeordnet ist, dem sich ein oder mehrere Verteilgebläse anschließen. Bei der Verwendung von rotierenden Strohtrenneinrichtung kann die Strohhäckseleinrichtung in derselben integriert sein, wie in der deutschen Patentanmeldung DE 19 640 055 A1 beschrieben. In diesem Fall kommt an Stelle des Strohhäckslers eine rotierende Übergabetrommel zum Einsatz, die das Gut in das oder die Verteilgebläse fördert.

Beim Betrieb von Mähdreschern, die wie nach der vorliegenden Bauweise u.a. mit einem Wurfgebläse zum Austrag von Häckselgut und Spreu ausgerüstet sind, stellt sich von Fall zu Fall die Aufgabe, wahlweise Häckselgut gemischt mit Spreu auszubringen oder das Stroh ungehäckselt im Schwad abzulegen und nur die vom Siebkasten ankommende Spreu zur Verteilung zu bringen.
Hierzu wird bereits in der internationalen Anmeldung WO 01/01754 vorgeschlagen, dass für die Spreuverteilung im Bereich zwischen der Windsiebeinrichtung und dem Strohhäcksler, Verteilergebläse stationiert sind, deren Austragrichtung wahlweise veränderbar ist. Der
Austrag und die Querverteilung des Häckselgutes erfolgt durch den Häckslerrotor selbst und einem mit Leitflächen bestückten Austraggehäuse.
Die Praxis hat gezeigt, dass eine einwandfreie Verteilung von Spreu und/oder Häckselgut ab einer bestimmten Breite des Mähvorsatzes ohne Gebläseunterstützung mit den bekannten Lösungen nicht möglich ist.

Die Aufgabe der Erfindung besteht also darin, die Breitverteilung von Häckselgut und/oder Spreu mit möglichst geringem Aufwand auch bei großen Mähtischbreiten sicherzustellen.

Die Lösung der Aufgabe wird erfindungsgemäß in dem Vorschlag gesehen, dass das oder die Wurfgebläse zum Zweck des wahlweisen Austrags eines Häcksel-Spreu-Gemisches oder nur von Spreu bei gleichzeitiger Stroh-Schwadablage über bekannte Gelenkhebelkombinationen und Stellglieder in zwei unterschiedliche planparallele Positionen höhenversetzbar ist (sind) und die Zuführung der Gutströme in beiden Endlagen des/der Wurfgebläse radial auf deren Gehäuse- bzw. Rotorumfang erfolgt, wobei das/die Wurfgebläse planparallel in seine/ihre Endlagen verschwenk- und feststellbar ist/sind, wobei außerdem der Häcksler durch eine lageveränderbare Leitklappe gegenüber dem Strohzufluß abdeckbar ist und die von der Windsiebreinigung anfallende Spreu durch ein aufrecht zwischen dem Strohhäcksler und der Windsiebreinigung angeordnetem Wandelement abgefangen, von einer Sammelschnecke zusammnengeführt und einem Wurfförderer übergeben wird, von dem aus die Spreu entlang kanalförmiger Führungsmittel mittig zwischen die zwei benachbarten Wurfgebläse geschleudert wird, wo ein keilförmiges Leitelement die zugeführte Spreu auf die beiden Wurfförderer aufteilt.

Anhand der Zeichnungen sei die Erfindung beispielhaft erläutert.
Es zeigen:
Fig.1 das abgabeseitige Ende eines Mähdreschers in schematischer Seitenansicht, wobei der Erfindungsgegenstand auf Häckselbetrieb mit integrierter Spreuverteilung eingestellt ist.
Fig.2 eine Teilseitenansicht entsprechend Fig.1 mit lageversetzten Wurfgebläsen für Schwadablage und separater Spreuverteilung
Fig.3 eine weitere Teilseitenansicht, wobei das Wurfgebläse auf "Außer Betrieb" eingestellt bzw. angehoben ist.

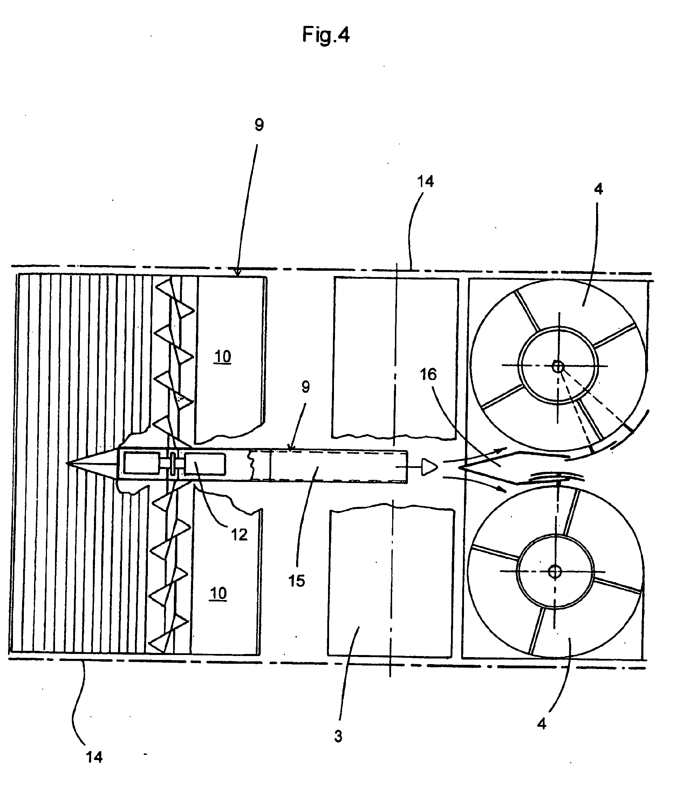

Fig.4 eine schematische Teildraufsicht auf die Spreufördereinrichtung, den Häckselrotor und die Wurfgebläse.

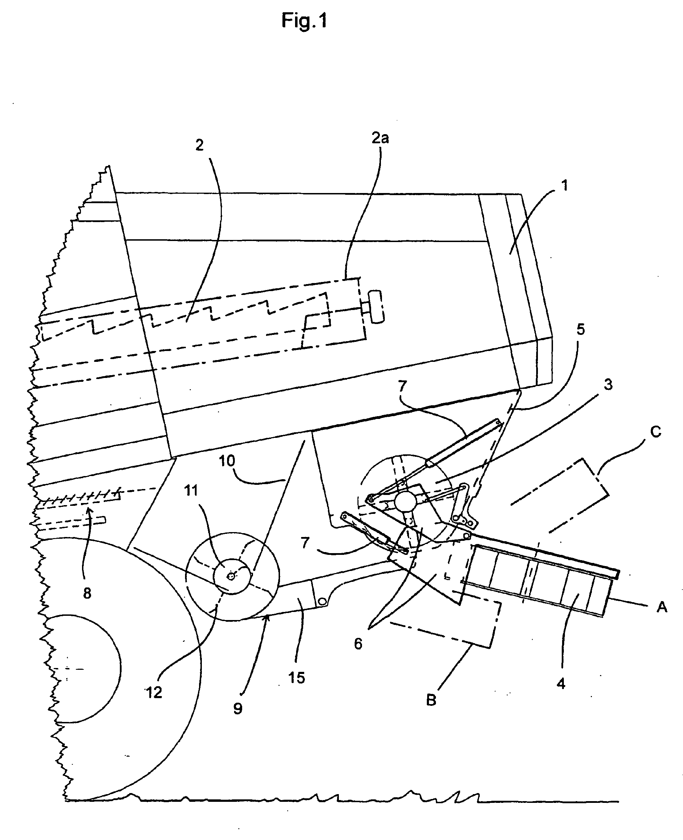

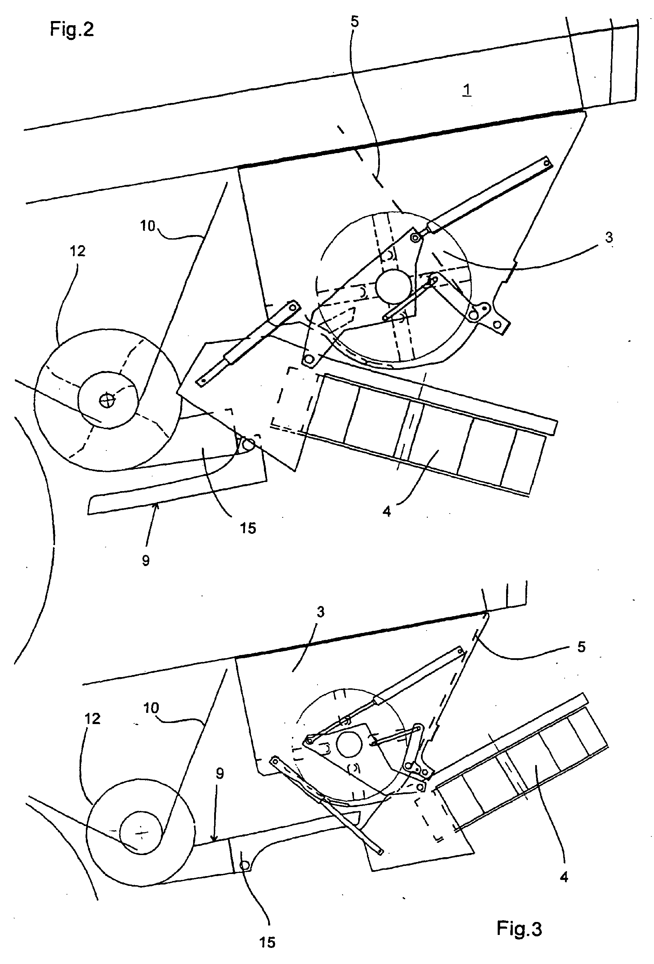

Mit 1 ist die Strohausfallhaube eines Mähdreschers bezeichnet, in der Strohschüttler 2 enden. Anstelle der Strohschüttler 2 kann eine rotierende Abscheideeinichtung 2a angeordnet sein. Unterhalb des Strohschüttlerabgangs ist ein Strohhäcksler 3 vorgesehen, der das Häckselgut in der Ebene der Austrittsöffnung in ein oder mehrere nebeneinander angeordnete Wurfgebläse 4 zum Zweck der Breitenverteilung übergibt. Soll das Stroh - ohne den Häcksler 3 zu durchlaufen - im Schwad abgelegt werden, so ist für diesen Zweck eine verschwenkbare Leitklappe 5 vorgesehen. Das oder die Wurfgebläse 4 sind über Gelenkhebelkombinationen 6 und Stellzylinder 7 in zwei unterschiedliche planparallele Positionen A und B bringbar, deren Bedeutung nachstehend noch näher erläutert wird. Mit 8 ist die Windsiebreinigung des Mähdreschers bezeichnet, von dem die Spreu in eine Übergabeeinrichtung 9 gelangt. Diese Übergabeeinrichtung 9 enthält ein Wandelement 10 welches die von der Windsiebeinrichtung 8 ausgetragene Spreu abfängt und den gegenläufigen Sammelschnecken 11 zuführt, welche die angesammelte Spreu einem Wurfförderer 12 übergeben. Dieser Wurfförderer 12 ist mittig auf der Maschinenlängsachse zwischen den Maschinenseitenwänden 14 angeordnet und fördert die Spreu entlang kanalförmiger Führungsmittel 15 mittig zwischen die benachbarten Wurfgebläse 4. Zwischen diesen ist, dem Wurfförderer 12 zugewendet, ein keilförmiges Leitelement 16 angeordnet, welches den Gutstrom der Spreu mittig den beiden Wurfgebläsen 4 , radial auf deren Umfang, zuteilt. Über die Führungsmittel 15 wird die Spreu in den Strom des gehäckselten Strohs (Position A des Wurfgebläses 4 in Fig. 1) oder direkt - ohne Strohbeimengung - in das Wurfgebläse 4 (Position B des Gebläses) geführt. Mit der Position C, des Wurfgebläses 4 (Fig.1) ist angedeutet, dass dieses auch gänzlich außer Wirkstellung gebracht werden kann, um Zugang zu benachbarte Maschinenelementen für evtl. ServiceArbeiten zu schaffen. In den Zeichnungen wird deutlich, (insbes. Fig.2), dass in der Position B der Wurfgebläse 4 das Stroh bei abgeschaltetem Antrieb des Häckslers und entsprechender Stellung der Leitklappe -5- ungehäckselt im Schwad abgelegt werden kann, während die Spreu bei entsprechender Verlagerung eines Teilabschnittes der Führungsmittel 15 direkt zur Breiteverteilung in das oder die Wurfgebläse 4 gelangt.

### Bezugszeichenliste

- 1: Strohausfallhaube
- 2: Strohschüttler
- 3: Strohhäcksler
- 4.: Wurfgebläse
- 5.: Leitklappe
- 6.: Gelenkhebelkombination
- 7.: Stellglieder
- 8.: Windsiebreinigung
- 9.: Übergabeförderer
- 10.: Wandelement
- 11.: Sammelschnecken
- 12.: Wurfförderer
- 13.: Führungsmittel
- 14.: Maschinenseitenwände
- 15.: Führungsmittel
- 16.: Keilförmiges Leitelement
- A,B,C: mögliche Positionen des Wurfgebläses 4

## Patentansprüche

1. Mähdrescher mit Strohschüttlern (2) oder rotierender Strohtrenneinrichtung, einer Windsiebeinrichtung (8) zur Spreuausscheidung, einer Strohhäckseleinrichtung (3) und wenigstens einem nachgeschaltetem Breitverteilaustrag dienenden Wurfgebläse (4) zur Verteilung von Häckselgut und/oder Spreu mit zum Boden gerichteter Rotationsachse, wobei die Gutaustrittsöffung des Häckslers (3) bzw. einer Übergabetrommel in der Ebene der Guteintrittsöffnung des oder der Wurfgebläse (4) liegt,
**dadurch gekennzeichnet,**
**dass,** das oder die Wurfgebläse (4) zum Zweck des wahlweisen Austrags eines Häcksel-Spreu-Gemisches oder nur von Spreu bei gleichzeitiger Stroh-Schwadablage über bekannte Gelenkhebelkombinationen (6) und Stellglieder (7) in wenigstens zwei unterschiedliche Positionen (A,B) höhenversetzbar ist (sind),und die Zuführung der Gutströme in diesen wenigstens zwei Lagen des/der Wurfgebläse 4 radial auf deren Rotorumfang erfolgt.

2. Mähdrescher nach Anspruch 1,
**dadurch gekennzeichnet,**
**dass** das/die Wurfgebläse (4) planparallel in seine/ihre wenigstens zwei Lagen verschwenkbar und feststellbar ist.

3. Mähdrescher nach einem oder mehreren der Ansprüche 1 und 2,
**dadurch gekennzeichnet,**
**dass** der Häcksler (3) durch eine lageveränderbare Leitklappe (5) gegenüber dem Strohzufluß abdeckbar und die an der Windsiebreinigung (8) anfallende Spreu durch Lageveränderung eines Teilabschnittes der Führungsmittel 15 allein ohne Strohhäcksel in den Wirkungsbereich des oder der Wurfgebläse (4) bringbar ist.

4. Mähdrescher nach einem oder mehreren der Ansprüche 1 bis 3
**dadurch gekennzeichnet,**
**dass** die von der Windsiebreinigung (8) anfallende Spreu durch ein aufrecht, zwischen dem Strohhäcksler (3) und der Windsiebreinigung (8) angeordnetem Wandelement (10) abgefangen, von einer Sammelschnecke (11) zusammengeführt und einem Wurfförderer (12) übergeben wird, von dem aus die Spreu entlang eines kanlaförmigen Führungsmittels (15) mittig zwischen die zwei benachbarten Wurfgebläse (4) geschleudert wird, wo ein keilförmiges Leitelement (16) die zugeführte Spreu auf die beiden Wurfförderer (4) aufteilt.

5. Mähdrescher nach einem oder mehreren der Ansprüche 1 bis 4
**dadurch gekennzeichnet,**
**dass** das oder die Wurfgebläse (4) durch Hochschwenken außer Wirkstellung (C) bringbar ist (sind).

## Claims

1. A combine harvester comprising straw walkers (2) or a rotating straw separation device, a wind sifting device (8) for chaff removal, a straw chopping device (3) and at least one downstream-connected projection blower (4) serving for widthwise distribution discharge for the distribution of chopped material and/or chaff with an axis of rotation directed towards the ground, wherein the material discharge opening of the chopping device (3) or a transfer drum is in the plane of the material entry opening of the projection blower or blowers (4),
**characterised in that**
for the purposes of selective discharge of a chopped material-chaff mixture or only chaff with simultaneous straw swath deposit the projection blower or blowers (4) is or are adjustable in respect of height into at least two different positions (A, B) by way of known articulated lever combinations (6) and control members (7) and the feed of the material flows is effected in those at least two positions of the projection blower or blowers (4) radially on to the rotor periphery thereof.

2. A combine harvester according to claim 1 **characterised in that** the projection blower or blowers (4) can be pivoted in plane-parallel relationship into its or their at least two positions and fixed.

3. A combine harvester according to one or more of claims 1 and 2 **characterised in that** the chopping device (3) can be covered with respect to the feed flow of straw by a variable-position guide flap (5) and the chaff produced at the wind sifting cleaning means (8) can be brought into the operative region of the projection blower or blowers (4) by a change in position of a portion of the guide means (15) alone without chopped straw.

4. A combine harvester according to one or more of claims 1 to 3 **characterised in that** the chaff produced by the wind sifting cleaning means (8) is caught by a wall element (10) which is arranged upright between the straw chopping device (3) and the wind sifting cleaning means (8), brought together by a collecting screw (11) and transferred to a projection conveyor (12) from which the chaff is hurled along a guide means (15) in passage form centrally between the two adjacent projection blowers (4), where a wedge-shaped guide element (16) divides the supplied chaff to the two projection conveyors (4).

5. A combine harvester according to one or more of claims 1 to 4 **characterised in that** the projection blower or blowers (4) can be brought out of the operative position (C) by upward pivotal movement.

## Revendications

1. Moissonneuse-batteuse avec des secoueurs (2) ou un dispositif rotatif de séparation de la paille, avec un dispositif de tamisage à air (8) pour éliminer la balle, avec un dispositif de broyage de paille (3) et avec au moins une soufflerie d'éjection (4) disposée en aval et servant de dispositif êparpilleur large pour éparpiller du produit broyé et/ou de la balle avec un axe de rotation orienté vers le sol, l'ouverture de sortie de produit du broyeur (3), respectivement d'un tambour de transfert, se trouvant dans le plan de l'ouverture d'entrée de produit de la ou des souffleries d'éjection (4), **caractérisée en ce que**, dans le but d'évacuer au choix un mélange produit broyé-balle ou uniquement de la balle avec formation simultanée d'un andain de paille, la ou les souffleries d'éjection (4) est (sont) réglable(s) en hauteur dans au moins deux positions différentes (A, B) par l'intermédiaire de combinaisons connues de leviers articulés (6) et d'organes de réglage (7), et, dans ces positions, au nombre d'au moins deux, de la (des) soufflerie(s) d'éjection (4), les flux de produit sont amenés radialement à la périphérie de son (leur) rotor.

2. Moissonneuse-batteuse selon la revendication 1, **caractérisée en ce que** la (les) soufflerie (s) d'éjection (4) peut (peuvent) être pivotée(s) et bloquée (s) dans ses (leurs) positions, au nombre d' au moins deux, parallèlement à son (leur) plan.

3. Moissonneuse-batteuse selon une ou plusieurs des revendications 1 et 2, **caractérisée en ce que** le broyeur (3) peut être isolé de la paille amenée au moyen d'un volet déflecteur à positionnement réglable (5), et la balle recueillie au niveau du dispositif de tamisage à air (8) peut être amenée seule, sans paille broyée, dans la zone d'action de la ou des souffleries d'éjection (4) en modifiant le positionnement d'une portion partielle des moyens de guidage (15).

4. Moissonneuse-batteuse selon une ou plusieurs des revendications 1 à 3, **caractérisée en ce que** la balle recueillie au niveau du dispositif de tamisage à air (8) est interceptée par un élément de paroi (10) disposé verticalement entre le broyeur de paille (3) et le dispositif de tamisage à air (8), est regroupée par une vis sans fin collectrice (11) et est transmise à un convoyeur d'éjection (12), à partir duquel la balle est envoyée, le long d'un moyen de guidage en forme de canal (15), au milieu des deux souffleries d'éjection (4) voisines où un élément déflecteur cunéiforme (16) répartit la balle amenée vers les deux convoyeurs d'éjection (4).

5. Moissonneuse-batteuse selon une ou plusieurs des revendications 1 à 4, **caractérisée en ce que** la ou les souffleries d'éjection (4) peut (peuvent) être amenée(s) en position inactive (C) en étant relevée (s) .
